# EUROPEAN PATENT APPLICATION

(11) **EP 4 768 328 A1**
(43) Date of publication of application: **01.07.2026**
(21) Application number: 25227080.6
(22) Date of filing: 23.12.2025
(51) Int. Cl.: B60N 2/14, B60N 2/90

(54) **A ROTARY SEAT LOCKING MECHANISM**

(30) Priority: 26.12.2024 CN 202411931205
(71) Applicant: Adient (Chongqing) Automotive Components Co., Ltd., Liangjiang New Area, Chongqing 401122 (CN)
(72) Inventor: LIN, Changfang, Chongqing, Liangjiang New Area, 401122 (CN); ZHANG, Ming, Chongqing, Liangjiang New Area, 401122 (CN); CHEN, Zhiyong, Chongqing, Liangjiang New Area, 401122 (CN); JIA, Wei, Chongqing, Liangjiang New Area, 401122 (CN); XIN, Yi, Chongqing, Liangjiang New Area, 401122 (CN)
(74) Representative: Liedtke & Partner Patentanwälte

(57) **Abstract**

A rotary seat locking mechanism, comprising a fixed disk (A) and a movable disk (B) in rotational fit with the fixed disk; a gear ring (1) is fixedly mounted on the fixed disk and has an annular tooth portion (1a); a locking block (2) and a transmission assembly (C) that controls sliding of the locking block are slidably mounted on the movable disk, a locking tooth (2a) adapted to the annular tooth portion is provided on a side portion of the locking block; by controlling sliding of the locking block through the transmission assembly, the locking tooth can be switched between engaging with and disengaging from the annular tooth portion. The beneficial effects of the present mechanism are that of achieving good and stepless locking without noise or shaking, and that its use is flexible.

## Description

### Technical field

The present invention relates to the technical field of vehicle seats, and in particular to a rotary seat locking mechanism.

### Background

With the continuous changing and upgrading of automobiles, the automobile industry is developing toward intelligence and electrification, and market requirements for seats are also becoming higher and higher. Seats are required not only to meet passengers' requirements for seating comfort, but also to satisfy passengers' demands for seat functionality, including a demand for rotary seats. Rotary seats can satisfy various communication modes required by customers and provide convenience and comfort for many scenarios such as business negotiations, family travel and gatherings with friends.

A turntable device is arranged at the bottom of the rotary seat, and the whole seat is driven to rotate by the turntable so that the seat can be adjusted to different orientations. After the rotation angle of the seat is adjusted to a position, in order to ensure its stability in that position, it is often necessary to additionally provide a locking structure for the turntable to ensure that the turntable can stably remain at a stop position and improve ride comfort and safety.

In the prior art, there are usually two types of locking mechanisms. One type is that an integral claw-shaped or tooth-shaped member is inserted into a corresponding locking hole to achieve locking, and there is a fitting clearance between a contour of the claw-shaped member or the tooth-shaped member and a contour of the locking hole, so that noise and shaking are easily generated during driving; the other type is that a pin is inserted into a locking hole between a fixed disk and a rotary disk to achieve locking. Neither of the two locking modes can achieve stepless adjustment, and generally a locking mechanism is only provided at a design position and at a 180-degree position, so the application scenarios are limited and flexibility is low.

### Summary of the invention

In view of this, the present invention provides a rotary seat locking mechanism, the purpose of which is to realize stepless locking of a rotary seat and solve the existing problems of the generation of noise and shaking after locking of the rotary seat.

In order to achieve the above purpose, the technical solution of the present invention is as follows:
A rotary seat locking mechanism, comprising a fixed disk and a movable disk in rotational fit with the fixed disk; a gear ring is fixedly mounted on the fixed disk and has an annular tooth portion; a locking block and a transmission assembly that controls sliding of the locking block are slidably mounted on the movable disk, and a locking tooth adapted to the annular tooth portion is provided on a side portion of the locking block; by controlling sliding of the locking block through the transmission assembly, the locking tooth can be switched between engaging with and disengaging from the annular tooth portion.

By adopting the above structure, a slidable locking block is controlled by the transmission assembly to engage with and disengage from the annular tooth portion to stably lock the seat at any rotated position, its structure is simple and flexible, and it is able to achieve stepless adjustment.

Preferably, the transmission assembly comprises a driving component slidably mounted on the movable disk, an elongated hole is provided on the driving component, a guide post slidably fit into the elongated hole is provided on the locking block, and an included angle is formed between a length direction of the elongated hole and a sliding direction of the locking block; by controlling the driving component to reciprocally slide, the locking block is forced to reciprocally slide under guiding and cooperative action of the elongated hole and the guide post. By adopting the above structure, the reciprocating sliding of the locking block is controlled by the driving component, and adjustment of a length or an included angle of the elongated hole can adjust the engagement and disengagement between the locking tooth and the annular tooth portion, so that the structure is compact and flexible.

Preferably, the transmission assembly further comprises a return spring and a pull lock, the return spring is mounted between the driving component and the movable disk, and the pull lock is connected to an end of the driving component away from the return spring. By adopting the above structure, the driving component is driven by the pull lock to cause the locking tooth to disengage from the annular tooth portion, and after adjustment to an ideal position, the return spring can reset it and ensure effective locking between the locking tooth and the annular tooth portion.

Preferably, a distal end of the pull lock is connected with an electric driving device. By adopting the above structure, the locking mechanism can be controlled electrically and also manually.

Preferably, a seat plate is fixedly mounted on the movable disk, a first sliding groove and a second sliding groove which are arranged perpendicular to each other and communicate with each other are provided on the seat plate, the locking block is slidably mounted in the first sliding groove, a positioning sliding block which is slidably mounted in the second sliding groove is provided on a lower side of the driving component, one end of the locking block away from the locking tooth is provided with a first positioning inclined surface, and a second positioning inclined surface adapted to the first positioning inclined surface is provided on a side portion of the positioning sliding block. By adopting the above structure, the first positioning inclined surface and the second positioning inclined surface adaptively press against each other, a self-locking angle is determined according to the materials of the positioning sliding block and the locking block, so that the inclination angle of the second positioning inclined surface is less than or equal to the self-locking angle, and self-locking can be realized between the positioning sliding block and the locking block to ensure a stable locking effect.

Preferably, the annular tooth portion has a tooth width of 0.5-1.5 mm and a tooth groove width of 0.6-1.8 mm. By adopting the above structure, the teeth are relatively thin, the fitting clearance between the locking tooth and the annular tooth portion is small so the locking effect is good, and the seat will not shake or make noise.

Preferably, the gear ring is an internal gear ring, and two sets of the locking block and the transmission assembly are symmetrically mounted on the movable disk. By adopting the above structure, locking is more stable.

Preferably, the two sets of the transmission assembly are centrally and symmetrically arranged about the center of the movable disk. By adopting the above structure, a better locking effect can be achieved.

Preferably, a toothed disk is fixedly mounted on the movable disk, a driving motor is fixedly mounted on the fixed disk, and an output shaft of the driving motor is connected with a gear engaging with the toothed disk. By adopting the above structure, the rotary seat can be adjusted electrically.

Compared with the prior art, the beneficial effects of the present invention are as follows:
1. Locking and unlocking of the rotary seat are realized through the engagement and disengagement between the locking tooth and the annular toothed portion. Because the annular toothed portion has thin teeth, the rotary seat can remain stopped at any rotated position to achieve stepless adjustment.
2. The locking block and the positioning sliding block press against each other through inclined surfaces, and in a locked state, the return spring pulls the driving component so that the engagement between the locking tooth and the annular tooth portion is tighter, the fitting clearance is small to prevent generation of noise and shaking.
3. The locking block can slide under guiding and cooperative action of the elongated hole and the guide post, the driving plate can cover the positioning sliding block and the locking block in a vertical direction, and the first positioning inclined surface and the second positioning inclined surface always press against each other, so that the locking block is subjected to a balanced force and the locking mechanism is more stable.
4. Rotation and locking of the seat can each be performed either manually or electrically, so that various usage modes can be realized and flexibility is high.

### Brief description of the drawings

- Fig. 1: is a schematic diagram showing the structure of the present invention;
- Fig. 2: is a schematic diagram showing a connection state of the driving component 3;
- Fig. 3: is a schematic diagram showing the first sliding groove 6a and the second sliding groove 6b;

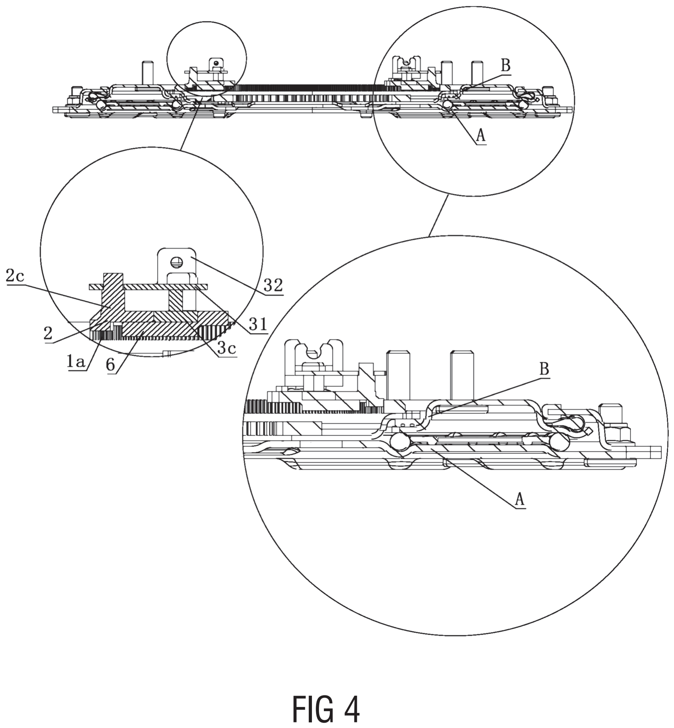

- Fig. 4: is a partial sectional view of the present invention;
- Fig. 5: is a schematic diagram showing the structure of the transmission assembly C;
- Fig. 6: is a schematic diagram showing engagement of the toothed disk 7 and the gear 9.

### Specific embodiments

The present invention is further described below in conjunction with the embodiments and the accompanying drawings.

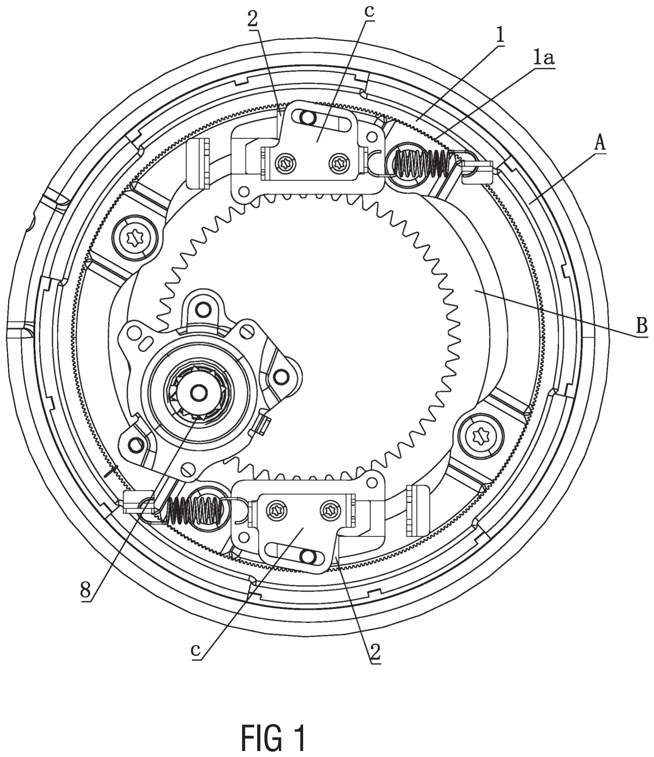

As shown in Fig. 1, a rotary seat locking mechanism includes a fixed disk A and a movable disk B in a rotational fit with the fixed disk A. When it is applied to a vehicle seat, the fixed disk A is mounted on a base slide rail, and the movable disk B is connected to the bottom of the vehicle seat. On the fixed disk A, the gear ring 1 having an annular tooth portion 1a is fixedly mounted; the locking block 2 is mounted on the movable disk B, the locking tooth 2a adapted to the annular tooth portion 1a is provided on a side portion of the locking block 2, and the locking block 2 can slide relative to the movable disk B; by controlling the movement of the locking block 2 through the transmission assembly C provided on the movable disk B, engagement and disengagement between the locking tooth 2a and the annular tooth portion 1a, that is, locking and unlocking of the rotary seat, can be realized. The tooth parameters of the annular tooth portion 1a are as follows: the tooth width is 0.5-1.5 mm, preferably 0.75 mm; the tooth groove width is 0.6-1.8 mm, preferably 0.82 mm; under such tooth parameter conditions, thin-tooth engagement can be formed, the fitting clearance is small, so there will be no noise or shaking, and the rotary seat can remain at any position so that stepless locking is achieved.

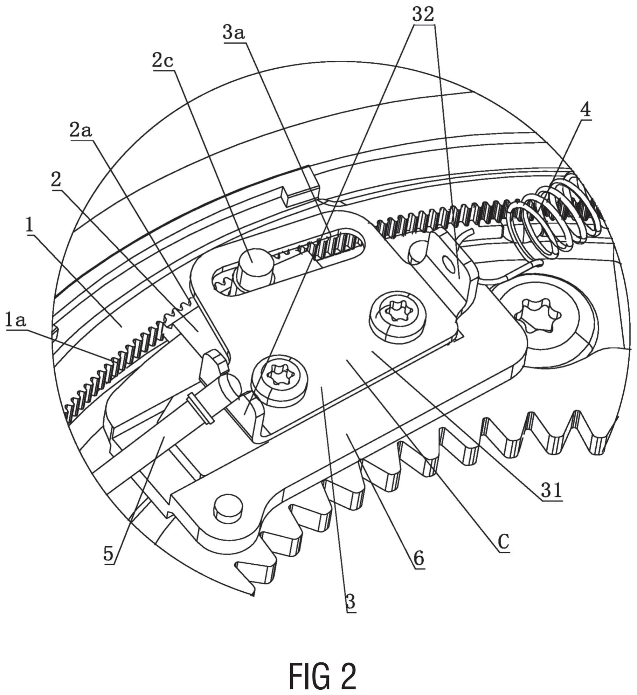

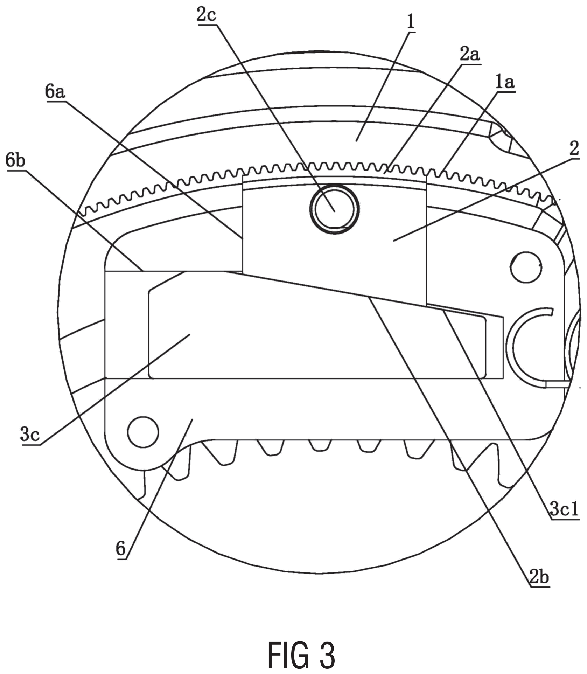

As shown in Figs. 2 and 3, the seat plate 6 is fixedly mounted on the movable disk, the first sliding groove 6a extending in a radial direction of the movable disk B is provided on the seat plate 6, and the second sliding groove 6b perpendicular to the first sliding groove 6a is further provided. The middle part of the second sliding groove 6b communicates with the first sliding groove 6a, and the locking block 2 is slidably mounted in the first sliding groove 6a. The transmission assembly C comprises the driving component 3, the positioning sliding block 3c, the return spring 4 and the pull lock 5. The driving component 3 comprises the horizontal driving plate 31 and two mounting vertical plates 32 which are perpendicular to the driving plate 31 and provided on two sides in a length direction, the two mounting vertical plates 32 being respectively used for connecting the return spring 4 and the pull cable 5.

The elongated hole 3a is provided in the driving plate 31, an included angle is formed between the length direction of the elongated hole 3a and the sliding direction of the locking block 2, and the guide post 2c slidably fit into the elongated hole 3a is provided on the locking block 2. The positioning sliding block 3c is fixedly connected to the lower side of the driving component 3 and is slidably mounted in the second sliding groove 6b. At one end of the locking block 2 away from the locking tooth 2a there is the first positioning inclined surface 2b, the second positioning inclined surface 3c1 adapted to the first positioning inclined surface 2b is provided on a side portion of the positioning sliding block 3c, and the second positioning inclined surface 3c1 is parallel to the elongated hole 3a.

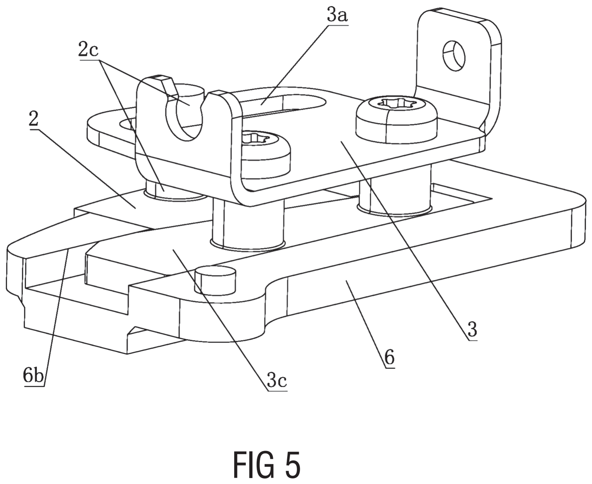

As shown in Figs. 2 and 5, in this embodiment, when the locking mechanism is in a locked state, the return spring 4, by virtue of its tensile force, pulls the driving component 3 so that the positioning sliding block 3c fixedly connected with the driving component 3 presses against the locking block 2, and the positioning sliding block 3c and the locking block 2 press against each other through their inclined surfaces. The positioning sliding block 3c provides a supporting force to the locking block 2, the supporting force forming an acute angle with the sliding direction of the locking block 2 so that the locking tooth 2a engages more tightly with the annular tooth portion 1a to eliminate free clearance and obtain a good locking effect. In addition, the self-locking angle is determined according to the materials of the positioning sliding block 3c and the locking block 2 so that the inclination angle of the second positioning inclined surface 3c1 is less than or equal to the self-locking angle to achieve self-locking between the positioning sliding block 3c and the locking block 2 and to ensure a stable locking effect. The distal end of the pull lock 5 is connected to an electric driving device or a manual forward actuator. By pulling the driving component 3 manually or electrically, the driving component 3 together with the positioning sliding block 3c can slide along the second sliding groove 6b in a direction away from the return spring 4, and the locking block 2 can slide in a direction away from the annular tooth portion 1a along the first sliding groove 6a under the guiding and cooperative action of the elongated hole 3a and the guide post 2c so as to achieve unlocking. Of course, when the driving component 3 moves in the opposite direction, the locking block 2 can also be pushed toward the annular tooth portion 1a under the guiding and cooperative action of the elongated hole 3a and the guide post 2c so as to achieve locking. In this process, the driving plate 31 can cover the positioning sliding block 3c and the locking block 2 in the vertical direction, and the first positioning inclined surface 2b and the second positioning inclined surface 3c1 always press against each other so that the locking block 2 is subjected to a balanced force and the locking mechanism is more stable.

As shown in Fig. 1, the gear ring 1 may be an internal gear ring or an external gear ring, and the corresponding locking block 2 can be mounted on an inner side or an outer side of the gear ring 1 to achieve locking. In this embodiment, the gear ring 1 is an internal gear ring, the two sets of the locking block 2 and the transmission assembly C are symmetrically mounted on the movable disk B, and the two sets of the transmission assembly C are centrally and symmetrically arranged about the center of the movable disk B, that is, the return springs 4 pull the driving components 3 in opposite directions so that forces are balanced to achieve better locking and to prevent shaking.

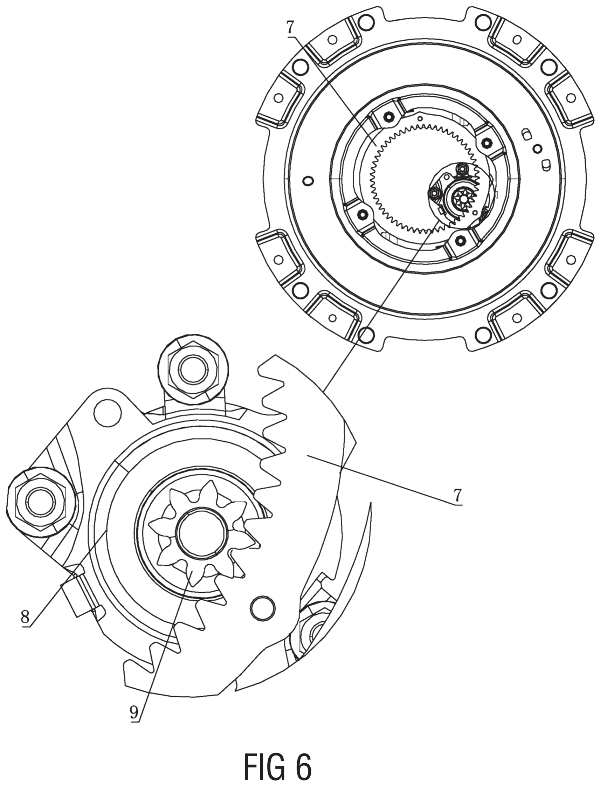

As shown in Fig. 6, a toothed disk 7 is fixedly provided in the middle of the movable disk B, the driving motor 8 is fixedly provided on the fixed disk A, and the output shaft of the driving motor 8 is connected with the gear 9 engaging with the toothed disk 7. By driving the gear 9 to rotate through the driving motor 8, the movable disk B can be driven to rotate so that rotation control of the seat is realized.

Finally, it should be noted that the above merely describe some embodiments of the present invention. Those of ordinary skill in the art can make many similar modifications in light of the teachings of the present invention without departing from the spirit and claims of the present invention, and such changes all fall within the protection scope of the present invention.

### List of References

- 1: gear ring
- 1a: annular tooth portion
- 2: locking block
- 2a: locking tooth
- 2b: first positioning inclined surface
- 2c: guide post
- 3: driving component
- 3a: elongated hole
- 3c: positioning sliding block
- 3c1: second positioning inclined surface
- 4: return spring
- 5: pull lock / pull cable
- 6: seat plate
- 6a: first sliding groove
- 6b: second sliding groove
- 7: toothed disk
- 8: driving motor
- 9: gear
- 31: driving plate
- 32: vertical plate

- A: fixed disk
- B: movable disk
- C: transmission assembly

## Claims

1. A rotary seat locking mechanism, comprising a fixed disk (A) and a movable disk (B) which is in rotational fit with the fixed disk (A), wherein:
a gear ring (1) is fixedly mounted on the fixed disk (A), and the gear ring (1) has an annular tooth portion (1a);
a locking block (2) and a transmission assembly (C) that controls sliding of the locking block (2) are slidably mounted on the movable disk (B), and a locking tooth (2a) adapted to the annular tooth portion (1a) is provided on a side portion of the locking block (2);
by controlling sliding of the locking block (2) through the transmission assembly (C), the locking tooth (2a) can be switched between engaging with and disengaging from the annular tooth portion (1a).

2. The rotary seat locking mechanism as claimed in claim 1, wherein: the transmission assembly (C) comprises a driving component (3) slidably mounted on the movable disk (B), an elongated hole (3a) is provided on the driving component (3), a guide post (2c) slidably fit into the elongated hole (3a) is provided on the locking block (2), and an included angle is formed between a length direction of the elongated hole (3a) and a sliding direction of the locking block (2); by controlling the driving component (3) to reciprocally slide, the locking block (2) is forced to reciprocally slide under guiding and cooperative action of the elongated hole (3a) and the guide post (2c).

3. The rotary seat locking mechanism as claimed in claim 2, wherein: the transmission assembly (C) further comprises a return spring (4) and a pull lock (5), the return spring (4) is mounted between the driving component (3) and the movable disk (B), and the pull lock (5) is connected to an end of the driving component (3) away from the return spring (4).

4. The rotary seat locking mechanism as claimed in claim 3, wherein: a distal end of the pull lock (5) is connected with an electric driving device.

5. The rotary seat locking mechanism as claimed in one of the preceding claims, wherein: a seat plate (6) is fixedly mounted on the movable disk (B), a first sliding groove (6a) and a second sliding groove (6b) which are arranged perpendicular to each other and communicate with each other are provided on the seat plate (6), the locking block (2) is slidably mounted in the first sliding groove (6a), a positioning sliding block (3c) which is slidably mounted in the second sliding groove (6b) is provided on a lower side of the driving component (3), one end of the locking block (2) away from the locking tooth (2a) is provided with a first positioning inclined surface (2b), and a second positioning inclined surface (3c1) adapted to the first positioning inclined surface (2b) is provided on a side portion of the positioning sliding block (3c).

6. The rotary seat locking mechanism as claimed in one of the preceding claims, wherein: the annular tooth portion (1a) has a tooth width of 0.5-1.5 mm, and a tooth groove width of 0.6-1.8 mm.

7. The rotary seat locking mechanism as claimed in one of the preceding claims, wherein: the gear ring (1) is an internal gear ring, and two sets of the locking block (2) and the transmission assembly (C) are symmetrically mounted on the movable disk (B).

8. The rotary seat locking mechanism as claimed in claim 7, wherein: the two sets of the transmission assembly (C) are centrally and symmetrically arranged about a center of the movable disk (B).

9. The rotary seat locking mechanism as claimed in of the preceding claims, wherein: a toothed disk (7) is fixedly mounted on the movable disk (B), a driving motor (8) is fixedly mounted on the fixed disk (A), and an output shaft of the driving motor (8) is connected with a gear (9) engaged with the toothed disk (7).
